Europäisches Patentamt

European Patent Office

Office européen des brevets

(19)

(11) **EP 1 369 436 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(51) Int Cl.⁷: **C08F 6/14**, C08F 6/16

(21) Anmeldenummer: **03011880.6**

(22) Anmeldetag: **27.05.2003**

(54) **Verfahren zur Herstellung von Emulsionspolymeren mit hoher Reinheit**

Process for forming emulsion polymers of high purity

Procédé de préparation de polymère en emulsion ayant une haute pureté

(84) Benannte Vertragsstaaten:
**DE FR GB IT**

(30) Priorität: **05.06.2002 DE 10224886**

(43) Veröffentlichungstag der Anmeldung:
**10.12.2003 Patentblatt 2003/50**

(73) Patentinhaber: **LANXESS Deutschland GmbH**
**51369 Leverkusen (DE)**

(72) Erfinder:
• **Wendling, Peter**
**51375 Leverkusen (DE)**
• **Göbel, Hartmut**
**40764 Langenfeld (DE)**

• **Josten, Rolf**
**41469 Neuss (DE)**
• **Krieger, Paul**
**40764 Langenfeld (DE)**
• **Winkelbach, Hans-Rafael, Dr.**
**51399 Burscheid (DE)**
• **Strauch, Hans-Christian, Dr.**
**41540 Dormagen (DE)**
• **Obrecht, Werner, Dr.**
**47447 Moers (DE)**
• **Lambert, Jean-Pierre**
**67000 Strasbourg (FR)**

(56) Entgegenhaltungen:
GB-A- 606 807     US-A- 2 378 732
US-A- 2 830 975

**Beschreibung**

Die vorliegende Erfindung betrifft ein Verfahren zur Herstellung von Emulsionspolymeren mit sehr hoher Reinheit.

In der Kautschukindustrie werden Verfahren zur Herstellung von Emulsionspolymerisaten benötigt, die es erlauben Produkte mit guten Eigenschaften und sehr hoher Reinheit auch unter ökologischen und ökonomischen Verfahrensweisen herzustellen.

In US-A 2 378 732 wird ein Verfahren beschrieben, mit dem angeblich Kautschuke mit einem Gehalt von < 0,5 Gew.-% Fettsäure erhalten werden sollen. Ein solcher Kautschuk wird durch Koagulation im saurem Medium und anschließender Wäsche bei pH-Werten > 10 nur dann erreicht, wenn das erhaltene Polymerisat so lange mit Wasser gewaschen wird, bis das Waschwasser neutral ist. Nachteilig bei diesem Verfahren sind hierbei die schlechten Raum / Zeitausbeuten, die ein mehrmaliges Waschen bis zum Neutralpunkt mit sich bringen sowie der hohe Verbrauch an Waschwasser. Dadurch gestaltet sich ein solches Verfahren weniger wirtschaftlich und weniger umweltfreundlich.

Die Aufgabe der vorliegenden Erfindung ist es daher, ein ökologisches und ökonomisches Verfahren zur Herstellung von Emulsionspolymeren, die in hoher Reinheit und damit guter Produktqualität anfallen, bereit zustellen.

Gegenstand der Erfindung ist daher ein Verfahren zur Herstellung von Emulsionspolymeren, das dadurch gekennzeichnet ist, dass man den durch Emulsionspolymerisation in üblicher Weise in Gegenwart von Fettsäuren- und/oder Harzsäuresalzen erhaltenen und von nicht umgesetzten Monomeren befreiten Latex durch Behandeln mit Säuren in einem Bereich von $pH \leq 6$, gegebenenfalls durch Zugabe von Fällungsmitteln, behandelt, anschließend die dabei erhaltene Polymersuspension auf einen $pH\text{-Wert} \geq 11$ einstellt, das so erhaltene Polymer aus der Suspension abtrennt und anschließend einer Scherung unterwirft bis sich ein Wassergehalt von $\leq 20\ \%$ einstellt.

Das erfindungsgemäße Verfahren kann kontinuierlich oder diskontinuierlich durchgeführt werden. Bevorzugt ist ein kontinuierliches Verfahren.

Als Emulsionspolymere, die nach dem erfindungsgemäßen Verfahren hergestellt werden können, kommen alle dem Fachmann bekannten Emulsionspolymerisate in Betracht.

Darunter sind alle Homo-, Co- und Pfropfpolymere sowie Terpolymere, die durch Emulsionspolymerisation hergestellt werden können, zu verstehen. Die in den Polymeren wiederholenden Monomerbausteine sind z.B. abgeleitet von Butadien, Isopren, Acrylnitril oder Styrol. Bevorzugt sind dabei Butadien Acrylnitril und/oder Styrol, besonders bevorzugt Butadien oder Acrylnitril. In den genannten Polymeren können noch weitere Monomerbausteine einpolymerisiert sein. Zum Beispiel kommen Säuren in Betracht wie: Acrylsäure, Methacrylsäure, Fumarsäure und/oder Maleinsäure aber auch ungesättigte Carbonsäureester als Monomere wie Methylacrylat, Ethylacrylat, Ethylmethacrylat, Propylacrylat, Propylmethacrylat, Butylacrylat, Butylmethacrylat, Hexylacrylat, Hexylmethacrylat, Cyclohexylacrylat, Cyclohexylmethacrylat, Laurylacrylat, Laurylmethacrylat, Polyethylenglycolacrylat, Polyethylenglycolmethacrylat, Propylenglycolacrylat, Propylenglycolmethacrylat, Epoxyacrylat, Epoxymethacrylat, Urethanacrylat und Urethanmethacrylat. Bevorzugt werden Methacrylsäure und Fumarsäure einpolymerisiert. Diese Polymere können auch in vemetzter Form vorliegen. Dabei kann die Vernetzung thermisch sowie mit allen dem Fachmann bekannten Vernetzungsmitteln erfolgen. Bevorzugte Vemetzungsmittel sind Divinylbenzol und Ethylenglykoldimethacrylat.

Nach dem erfindungsgemäßen Verfahren werden Emulsionspolymere erhalten, die - wie erwähnt - in üblicher Weise in Gegenwart von Emulgatoren hergestellt werden. Diese Emulgatoren sind Alkali-Salze von Fett- und/oder Harzsäuren. Die Verwendung der Alkalisalze von Fettsäuren bei der Herstellung von Polymeren ist lange bekannt (Methoden der organischen Chemie, Houben-Weyl, Band XIV/1, Makromolekulare Stoffe, Teil 1, Seite 192-194, Georg Thieme Verlag, 1961). Die Kettenlänge der Fettsäuren beträgt zwischen 10 und 22 C-Atomen. Auch einfach oder mehrfach ungesättigte Fettsäuren sind geeignet. Die fettsauren Salze können alleine oder als Gemisch von fettsauren Salzen unterschiedlicher Kettenlänge eingesetzt werden. Wird ein Gemisch eingesetzt, sollte der Anteil an fettsauren Salzen mit Kettenlängen von 16 bis 18 C-Atomen $\geq 80\ \%$ betragen. Bei Verwendung eines einzelnen fettsauren Salzes ist das Alkalisalz der Ölsäure bevorzugt.

Die eingesetzten Harzsäuren sind aus Wurzeln, Kiefembalsam und Tallöl gewonnene tricyclische Diterpencarbonsäuren. Diese sogenannten unmodifizierten Harzsäuren, können beispielsweise zu disproportionierten Harzsäuren umgearbeitet werden (W. Bardendrecht, L.T. Lees in Ullmanns Encyclopädie der Technischen Chemie, 4. Auflage, Bd. 12, 525 - 538, Verlag Chemie, Weinheim - New-York 1976). In Form ihrer Alkalisalze werden überwiegend disproportionierte Harzsäuren als Emulgatoren zur Herstellung von Polymeren und Latices verwendet (W. Barendrecht, L.T. Lees in Ullmanns Encyclopädie der Technischen Chemie, 4. Auflage, Bd. 12, 530, Verlag Chemie, Weinheim - New York 1976). In einigen Fällen werden aber auch die Alkalisalze von unmodifizierten Harzsäuren verwendet (Methoden der organischen Chemie, Houben-Weyl, Band XIV/1, Makromolekulare Stoffe, Teil 1, Seiten 196 und 738, Georg Thieme Verlag, 1961). Beide, unmodifizierte und disproportionierte Harzsäuren sind in Form ihrer Alkalisalze für das erfindungsgemäße Verfahren geeignet. Die Alkalisalze disproportionierter Harzsäure sind bevorzugt. Die Fett- und/oder Harzsäuresalze können selbstverständlich auch im Gemisch untereinander eingesetzt werden. Besonders bevorzugt sind fettsaure Salze und Gemische derselben.

Die Fett- und/oder Harzsäuresalze können selbstverständlich auch im Gemisch untereinander eingesetzt werden. Besonders bevorzugt sind Fettsäuresalze und Gemische derselben.

Darüber hinaus kann ein Teil der Fett- und/oder Harzsäurensalze durch Sulfate oder Sulfonate ersetzt werden.

Die Menge der Fett- und/oder Harzsäurensalze, die ersetzt werden kann, hängt ab von der absolut eingesetzten Menge an Fett- und oder Harzsäurensalzen, der emulgierenden Qualität der Sulfate und Sulfonate, ferner ob der resultierende Latex mit den im erfindungsgemäßen Verfahren erwähnten Fällmitteln und Fällhilfsmitteln quantitativ zu fällen ist. Durch entsprechende Vorversuche ist die Menge der Fett- und/oder Harzsäurensalze, die ersetzt werden kann, leicht zu bestimmen.

Bevorzugt werden Sulfonate mit aliphatischen und/oder aromatischen Substituenten und Sulfate mit aliphatischen Substituenten eingesetzt. Die Anzahl der kommerziell verfügbaren Sulfonate und Sulfate ist relativ groß und dem Fachmann bekannt. Ebenfalls ist bekannt, dass diese zur Herstellung von Polymeren eingesetzt werden (Methoden der organischen Chemie, Houben-Weyl, Band XIV/1, Makromolekulare Stoffe, Teil 1, Seite 196 - 199 und Seiten 207 und 208, Georg Thieme Verlag, 1961).

Der in üblicher Weise von nicht umgesetzten Monomeren abgetrennte Latex wird anschließend mit Säuren in einem pH-Bereich von $\leq 6$ behandelt, wobei der Latex ausfällt. Bevorzugt wird die Behandlung bei einem pH-Wert $\leq 4$, besonders bevorzugt $\leq 2$ durchgeführt.

Die Anfällung des Polymeren wird bei Temperaturen von 20 bis 110°C, bevorzugt bei 50 bis 98°C, besonders bevorzugt bei 65 bis 85°C, durchgeführt.

Zur Fällung können alle mineralischen und organischen Säuren verwendet werden, die es gestatten die gewählten pH-Bereiche einzustellen. Mineralische Säuren werden bevorzugt zur pH-Wert Einstellung verwendet. Hier sind zu nennen: Salzsäure, Schwefelsäure, schweflige Säure, Salpetersäure, salpetrige Säure, und Phosphorsäure. Besonders bevorzugt ist die Verwendung von Schwefelsäure.

Wie erwähnt können für die Fällung des erfindungsgemäßen Verfahrens zusätzlich Fällungsmittel und Fällungshilfsmittel verwendet werden. Beispielsweise werden als zusätzliche Fällungsmittel die bekannten Alkalisalze von anorganischen Säuren sowie deren Mischungen eingesetzt. Als Alkalisalze kommen insbesondere die Natrium- und Kaliumsalze folgender Säuren in Betracht: Salzsäure, Schwefelsäure, schweflige Säure, Salpetersäure, salpetrige Säure, Phosphorsäure. Bevorzugt sind die Natrium- und Kaliumsalze von Salzsäure und Schwefelsäure. Besonders bevorzugt ist Natriumchlorid und Natriumsulfat. Das Fällmittel wird in einer Menge von 0,05 bis 10 Gew.-%, bevorzugt 0,5 bis 8 Gew.-%, besonders bevorzugt 1 bis 5 Gew.-%, bezogen auf den Feststoffgehalt der Latexdispersion, zugegeben.

Darüber hinaus können noch die bekannten Fällungshilfsmittel bei der Fällung des Latex hinzugesetzt werden. Als Fällungshilfsmittel sind zu nennen: Gelatine, Polyvinylalkohol, Cellulose, carboxylierte Cellulose und kationische sowie anionische Polyelektrolyte oder deren Mischungen. Bevorzugt sind Gelatine und kationische sowie anionische Polyelektrolyte.

Werden Fällungshilfsmittel verwendet, so werden diese bevorzugt in einer Menge von 0,01 bis 2 Gew.-%, besonders bevorzugt 0.05 bis 1 Gew.-%, bezogen auf den Feststoffgehalt der Latexdispersion zugegeben.

Die günstigste Menge an Säuren, Fällungsmittel und Fällungshilfsmittel kann leicht durch entsprechende Vorversuche ermittelt werden. Bei der Fällung des Latex ist eine gute Durchmischung von Latex und Fällmittel erforderlich. Diese kann mit Hilfe einer Düse erfolgen, durch die Dampf mit Fällmittel dem Latex zugeführt wird, oder sie erfolgt in einem gut gerührten Kessel.

Nach dem erfindungsgemäßen Verfahren wird die so erhaltene Polymersuspension durch Zugabe einer wässrigen Alkalihydroxid-Lösung auf einen pH-Wert von $\geq 11$ eingestellt. Bevorzugt wird der pH-Wert auf $\geq 11,5$ eingestellt. Als wässrige Alkalihydroxid-Lösungen werden, Lösungen von Natriumhydroxid oder Kaliumhydroxid, bevorzugt Natriumhydroxid in Wasser mit einem Alkalihydroxidgehalt von 10 bis 50 %, eingesetzt.

Die alkalische Behandlung des koagulierten Polymeren wird bevorzugt bei 60 bis 100°C, besonders bevorzugt bei 65 bis 95°C, durchgeführt.

Nach der alkalischen Behandlung wird das Polymer in der dem Fachmann üblichen Weise von der Suspension abgetrennt. Bevorzugt werden zur Abtrennung des Polymers Siebe, bevorzugt Vibrationssiebe verwendet.

Bei dem erfindungsgemäßen Verfahren ist es im Gegensatz zu den Verfahren des Standes der Technik nicht erforderlich, das erhaltene Polymerisat einer zusätzlichen Wäsche mit Wasser zu unterwerfen.

Das von der Suspension abgetrennte Polymerisat wird gemäß dem erfindungsgemäßen Verfahren einer Scherung unterworfen, wobei vorhandenes Serum abgetrennt wird. Die Scherung wird dabei so durchgeführt, dass sich im Polymeren eine Restfeuchte von $\leq 20$ Gew.-%, besonders bevorzugt $\leq 10$ Gew.-%, insbesondere $\leq 5$ Gew.-% einstellt.

Die Restfeuchte ist dabei wie folgt definiert:

Masse entfernte Feuchtigkeit x 100 / Masse trockenes Produkt

Die Scherung wird in dafür geeigneten Apparaten, die dem Fachmann bekannt sind z.B. Entwässerungsextrudern durchgeführt.

Die Entwässerungsextruder bestehen im Gehäuse aus Bereichen mit Seiherzonen oder aus geschlossenen Zonen. Die Seiherzonen bestehen aus Seiherstäben mit unterschiedlichen Spaltmaßen. Die Welle besteht aus einzelnen aufgezogenen Schneckenelementen. Somit kann man die Durchmesser, Steigung, Gangzahl und das Material der Elemente immer den verfahrenstechnischen Anforderungen an der Stelle anpassen. Zum Trennen von Serum und Polymer sind auf der Welle Abpresszonen mit verschiedenen Durchmessern aufgebracht. Am Ende der Extruder ist eine geeignete Schneidvorrichtung angebracht, um die Polymeren in eine für die Trocknung geeignete Form zu überführen.

Nachdem durch entsprechende Scherung die oben erwähnte Restfeuchte in den Polymeren eingestellt wurde, wird das Polymer anschließend noch wie üblich getrocknet.

Die nach dem erfindungsgemäßen Verfahren erhaltenen Emulsionspolymerisate fallen in sehr reiner Form an. Sie besitzen einen Emulgatorgehalt (Salze der Fett- und oder Harzsäuren und/oder ihrer freien Säuren) $\leq 0{,}4$ Gew.-% und die Konzentration der 1-wertigen Kationen in den Emulsionspolymerisaten beträgt $\leq 1000$ mg, bevorzugt $\leq 700$ mg, besonders bevorzugt $\leq 400$ mg/kg Polymer, die Konzentration der 2-und 3- wertigen Kationen beträt $\leq 500$ mg, bevorzugt $\leq 250$, besonders bevorzugt $\leq 100$ mg pro kg Polymer.

**Beispiele**

Die Prüfung der Eigenschaften der erfindungsgemäßen Beispiele und der Vergleichsbeispiele wurde wie folgt durchgeführt:

- Die Restfeuchte wurde mittels Infrarotstrahlung und Analysenwaage bei 150°C ermittelt. Die verwendeten Geräte waren Analysenwaage PM 480 und Infrarottrockner LP 16 der Fa. Mettler. Die Einwaage an feuchtem Kautschuk betrug ca. 5 g. Der Restfeuchtewert gilt als konstant und ermittelt, wenn bei einer Zeitdifferenz von 120 Sekunden, die Gewichtsdifferenz weniger als 10 mg beträgt. Ist dieser Zustand erreicht, schaltet das Gerät automatisch ab. Die ermittelte Restfeuchte kann direkt am Gerät abgelesen werden.

- Die Gehalte der Kationen Kalzium, Magnesium, Natrium und Kalium wurden mittels Atomabsorptionsspektroskopie ermittelt.

- Die Chloridionengehalte wurde mittels Chlorbestimmung ermittelt.

- Der Fettsäuregehalt (Summe Fettsäure und fettsaures Salz) im Polymeren wurde gaschromatisch ermittelt. Folgende Parameter werden verwendet:

| | |
|---|---|
| Kapillarsäule | Permabond FFAP-DF-0,25m* 0,32 mm ID |
| Temperaturen Injektor | 240 °C |
| Detektor | 240 °C |
| Ofen | 220 °C, isotherm |

Bestimmung der Gesamtfettsäure:

Es werden 4-5 g (auf 0,01 g genau) der zu untersuchenden Mischung in 20 ml Toluol und 20 ml THF gelöst. Die Lösung wird mit 100 µl $H_3PO_4$ sowie mit 5 ml Standardlösung versetzt. Nach 1,5 h Reaktionszeit wird die Lösung mit 60 ml Methanol ausgefällt. Gegebenenfalls werden 20 ml der Extraktlösung unter Stickstoff getrocknet und mit 2 ml Methanol versetzt. Die Lösung wird durch Überführung in ein neues Probenfläschchen vom Polymer abgetrennt und erneut unter Stickstoff getrocknet. Konzentrationsabhängig wird der Rückstand mit 500 µl, 1000 µl oder 2000 µl Toluol versetzt.

Analysen-Durchführung:

1,0 µl der Extrakt-/Standardlösung wird mit automatischer Probenaufgabe injiziert (Doppelbestimmung).

- Die Messung der Mooneyviskosität des Rohpolymeren wurde nach DIN 53523 durchgeführt.

4

Im folgenden wird die Erfindung durch Ausführungsbeispiele näher erläutert.

### Beispiel 1

Es wurde eine abgestoppte und stabilisierte, wässrige NBR-Latexdispersion (13 % Feststoffgehalt) mit einem Acrylnitrilgehalt von 35 Gew.-%, einem Butadiengehalt von 65 Gew.-% bezogen auf das Polymer sowie einer Mooney-Viskosität von 80 M.E. (ML1+4 bei 100°C) verwendet. Die Latexdispersion wurde mit einer Flussrate von 15 m$^3$/h in eine Fälldüse gepumpt, Wasserdampf (900 kg/h) eingespeist und 50 %-ige Schwefelsäurelösung mit 60 1/h in die mit einer Strömungsgeschwindigkeit 20 m/s strömende Latexdispersion eingespeist. Das so erhaltene Koagulat wurde kontinuierlich in einem gerührten Kessel (Konversionskessel) dispergiert, in welchem eine wässrige NaOH-Lösung mit einem pH-Wert von 11,5 und einer Temperatur von 80°C vorgelegt wurde. In den Kessel wurden ebenfalls kontinuierlich 50 %-ige Natronlauge mit 105 1/h und 3m$^3$/h Frischwasser zudosiert, so dass sich ein pH-Wert von 12 einstellt. Die alkalische Suspension wurde über ein Vibrationssieb geführt, wobei die Polymerkrümel und das wässrige Serum getrennt wurden. Das alkalische Serum wurde mit einer Flussrate von 35 m$^3$/h zurück in den Konversionskessel gepumpt. Die feuchten Polymerkrümel wurden kontinuierlich in eine mit Seiherstäben ausgestattete Entwässerungsschnecke überführt, in welcher die Restfeuchte bis auf 5 % bezogen auf das Polymer, eingestellt wurde.

Der Entwässerungsschnecke war nachgeschaltet ein rotierendes Messer, welches das Produkt auf 3-4 mm Krümelgröße zerkleinerte. Anschließend wurden die Krümel zu einem Trockner transportiert und auf eine Restfeuchte von <0,7 % getrocknet. Die Ionen- und Fettsäuregehalte sind in Tabelle 1 aufgeführt.

Tabelle 1:

| Ionenanalytik | | | | | | | |
|---|---|---|---|---|---|---|---|
| **Na** mg/kg | **K** mg/kg | **Ca** mg/kg | **Mg** mg/kg | **Cl** anorg. % | **S** Gesamt % | **Asche** % | **Fettsäuregehalt** % |
| | | | | | | | |
| 208 | 149 | 4 | <1 | 0,009 | 0,110 | <0,05 | 0,13 |

Die analytischen Daten des erfindungsgemäßen Beispiels 1 zeigen, dass bei Anwendung des erfindungsgemäßen Verfahrens sehr reine Produkte erhalten werden.

### Beispiel 2

Eine abgestoppte und stabilisierte, wässrige NBR-Latexdispersion (16,5 % Feststoffgehalt), welche auf einen Acrylnitrilgehalt von 35 Gew.-%, einem Butadiengehalt von 65 Gew.-% bezogen auf das Polymer sowie auf eine Mooney-Viskosität von 30 M.U. (ML1+4 bei 100°C) eingestellt wurde, wurde mit einer Flussrate von 8,8 m$^3$/h durch ein Rohr in einen Kessel gepumpt. Die entstandene Fällsuspension wurde dabei auf 70°C temperiert und durch Zusatz von Schwefelsäure auf einen pH-Wert von 3 eingestellt. Gleichzeitig wurde eine wässrige Lösung eines kationischen Polyelektrolyten (Superfloc C567) mit 5 kg/h zudosiert. Das so erhaltene Koagulat wurde aus dem Fällkessel mittels eines Überlaufs kontinuierlich in einen zweiten gerührten Kessel überführt, indem durch Zusatz von Natronlauge ein pH-Wert von 8 eingestellt wurde. Die alkalische Suspension wurde über ein Sieb geführt, wobei die Polymerkrümel und das wässrige Serum voneinander getrennt wurden. Die feuchten Polymerkrümel wurden danach in einem Kessel bei 90°C und einem pH-Wert von 11,5 gerührt. Polymerkrümel und Serum wurden durch ein Vibrationssieb von einander getrennt. Der Austrag der Polymerkrümel aus dem Kessel erfolgte durch Zusatz von 6 m$^3$/h Wasser und dem zurückgeführten Serum. Das feuchte, polymere Produkt wurde zunächst in einer Entwässerungsschnecke auf eine Restfeuchte von 8 % entwässert, mittels eines rotierenden Messers zerkleinert und anschließend in einen Trockner überführt wurde, in dem das Polymer auf eine Restfeuchte von < 0,7 % getrocknet wurde. Die Ionen- und Fettsäuregehalte sind in Tabelle 2 aufgeführt.

Tabelle 2

| Ionenanalytik | | | | | | | |
|---|---|---|---|---|---|---|---|
| **Na** mg/kg | **K** mg/kg | **Ca** mg/kg | **Mg** mg/kg | **Cl anorg.** % | **S Gesamt** % | **Asche** % | **Fettsäuregehalt** % |
| | | | | | | | |
| 150 | 62 | 2 | <1 | 0,011 1 | 0,100 | <0,05 | 0,37 |

Die analytischen Daten des erfindungsgemäßen Beispiels 2 zeigen, dass bei Anwendung des erfindungsgemäßen Verfahrens sehr reine Produkte erhalten werden.

**Patentansprüche**

1.   Verfahren zur Herstellung von Emulsionspolymeren, **dadurch gekennzeichnet, dass** man den durch Emulsionspolymerisation in üblicher Weise in Gegenwart von Fettsäure- und/oder Harzsäuresalz erhaltenen und von nicht umgesetzten Monomeren befreiten Latex mit Säuren in einem Bereich von pH ≤ 6 behandelt, gegebenenfalls unter Zugabe von Fällungsmitteln, anschließend die dabei erhaltene Polymersuspension auf einen pH-Wert ≥ 11 einstellt, das Polymer aus der Suspension abtrennt und anschließend einer Scherung unterwirft bis sich eine Restfeuchte von ≤ 20 % einstellt.

2.   Verfahren nach Anspruch 1 **dadurch gekennzeichnet, dass** der Latex mit Säuren in einem Bereich von pH ≤ 4 behandelt wird.

3.   Verfahren nach Anspruch 1 und 2 **dadurch gekennzeichnet, dass** die erhaltene Polymersuspension auf einen pH-Wert ≥ 11,5 eingestellt wird.

4.   Verfahren nach einem der Ansprüche 1 bis 3 **dadurch gekennzeichnet, dass** das Polymer einer Scherung unterworfen wird bis sich eine Restfeuchte von ≤ 10 %, bevorzugt ≤ 5 % einstellt.

**Claims**

1.   Process for preparing emulsion polymers, **characterized in that** the latex obtained in the usual way by emulsion polymerization in the presence of fatty acid salt and/or of resin acid salt, and freed from unreacted monomers, is treated with acids in the pH range ≤ 6, where appropriate with addition of precipitants, and then the pH of the resultant polymer suspension is adjusted to ≥ 11, the polymer is removed from the suspension, and is then subjected to shear until the residual moisture level is ≤ 20%.

2.   Process according to Claim 1, **characterized in that** the latex is treated with acids in a pH range ≤ 4.

3.   Process according to Claim 1 and 2, **characterized in that** the pH of the resultant polymer suspension is adjusted to ≥ 11.5.

4.   Process according to any of Claims 1 to 3, **characterized in that** the polymer is subjected to shear until the residual moisture level is ≤ 10%, preferably ≤ 5%.

**Revendications**

1.   Procédé de production de polymères en émulsion **caractérisé en ce que** l'on traite avec des acides dans un domaine de pH ≤ 6 le latex obtenu par polymérisation en émulsion de la manière habituelle en présence de sel d'acide gras et/ou d'acide résinique et débarrassé des monomères qui n'ont pas réagi, éventuellement en ajoutant des agents de précipitation, puis on règle la suspension de polymère ainsi obtenue à un pH ≥ 11, on sépare le polymère de la suspension puis on le soumet à un cisaillement jusqu'à ce qu'une humidité résiduelle ≤ 20 % s'établisse.

2. Procédé selon la revendication 1 **caractérisé en ce que** le latex est traité avec des acides dans un domaine de pH ≤ 4.

3. Procédé selon les revendications 1 et 2 **caractérisé en ce que** la suspension de polymères obtenue est réglée à un pH ≥ 11,5.

4. Procédé selon l'une des revendications 1 à 3 **caractérisé en ce que** le polymère est soumis à un cisaillement jusqu'à ce qu'une humidité résiduelle ≤ 10 %, de préférence ≤ 5 % s'établisse.